Europäisches Patentamt

European Patent Office

Office européen des brevets

(11) Veröffentlichungsnummer: **0 271 430**
**A2**

(12) **EUROPÄISCHE PATENTANMELDUNG**

(21) Anmeldenummer: 87710023.0

(22) Anmeldetag: 10.12.87

(51) Int. Cl.⁴: **B 60 H 1/22**
F 24 C 7/10

(30) Priorität: 10.12.86 DE 8633047

(43) Veröffentlichungstag der Anmeldung:
15.06.88 Patentblatt 88/24

(84) Benannte Vertragsstaaten:
AT BE CH DE FR GB IT LI LU NL SE

(71) Anmelder: **Fleck, Oskar**
**Industriestrasse 12**
**D-4354 Datteln (DE)**

(72) Erfinder: **Fleck, Oskar**
**Industriestrasse 12**
**D-4354 Datteln (DE)**

(74) Vertreter: **Patentanwälte Schulze Horn und Hoffmeister**
**Goldstrasse 36**
**D-4400 Münster (DE)**

(54) **Tragbarer Wärmestrahler für Kraftfahrzeuge.**

(57) Um beschlagene oder vereiste Fahrzeugscheiben von dem Belag zu befreien, wird ein tragbares Gerät zur Erzeugung von Wärmestrahlen, mit einer Strahlungsquelle, einem Reflektor, einem Gehäuse und einem Stromkabel verwendet, bei dem das Stromkabel (5) in einem Niedervolt-Stecker (7) für Auto-Innenraumstecker (Zigarettenanzünder) endet, das Gerät einen Handgriff (11) besitzt, und bei dem die Strahlungsquelle ein Glühkörper (1) ist, der in eine auch für Glühbirnen geeignete Fassung (2) eingesetzt ist.

Bundesdruckerei Berlin

**Beschreibung**

Tragbarer Wärmestrahler für Kraftfahrzeuge

Die Erfindung betrifft ein tragbares Gerät zur Erzeugung von Wärmestrahlen, mit einer Strahlungsquelle, einem Reflektor, einem Gehäuse und einem Stromkabel.

Für Autofahrer ergibt sich in der kalten Jahreszeit das Problem, daß die Fahrzeugscheiben oft beschlagen sind, und zwar nicht nur an ihrer Außenseite, sondern auch im Innenraum. Bei Frostwetter können die Scheiben der Fahrzeuge sogar zugefroren sein. Um die Scheiben von dem Kondensat freizumachen, sind verschiedene Geräte bekannt, z. B. heizbare Kleinventilatoren, die dazu dienen, die Scheiben von dem Belag zu befreien.

Diese Geräte blasen jedoch immer nur die feuchte Luft, die sich im Innenraum des Fahrzeuges befindet, wieder gegen die Scheibe, so daß sich nach dem Abschalten der Geräte schnell wieder ein Belag bildet. Vorteilhafter wäre es dagegen, die Scheibe selbst zu erwärmen, so daß der Taupunkt überschritten wird und die Kondensation verhindert wird.

Es stellt sich damit die Aufgabe, eine tragbare Vorrichtung anzugeben, die handlich und leicht zu bedienen ist und mit der vor dem Startbeginn eines Personenkraftwagens die beschlagene Scheibe sowohl von einem Eis- als auch von einem Wasser-Kondensat befreit werden kann und die bei der Anwendung auch dafür sorgt, daß ein Wiederbeschlagen der Scheibe für eine gewisse Zeit ausgeschlossen ist.

Neuerungsgemäß wird für ein Gerät der eingangs genannten Art diese Aufgabe dadurch gelöst, daß dieses tragbar ist und zur Erzeugung von Wärmestrahlen dient, und das speziell auf die Bedürfnisse eines Kraftfahrzeuges dadurch abgestellt ist, daß das Stromkabel in einem Niedervolt-Stecker für Auto-Innenraumstecker endet, das Gerät einen Handgriff besitzt und daß die Strahlungsquelle als Glühkörper gestaltet ist, der in eine auch für Glühbirnen geeignete Fassung einsetzbar ist.

Vorteilhaft bei dieser Neuerung ist, daß vom Innenraum des Fahrzeuges die Scheiben vom Kondensationsbelag befreit werden können, so daß ein sicheres Fahren bei klaren Sichtverhältnissen gleich zu Beginn der Fahrt gewährleistet ist. Die Scheibe selbst wird auch erwärmt, da die Wärmestrahlen entsprechend der Eigenschaft des Glases im wesentlichen nicht durch die Scheibe durchgelassen werden, sondern für eine Erwärmung des Glases für wenige Grade sorgen, so daß der Taupunkt überschritten wird.

Das lästige Abkratzen von Eisbelägen auf den Scheiben kann durch die Neuerung vermieden werden. Ein Fahren bei mangelhafter Sicht braucht nicht mehr zu erfolgen. Die Neuerung dient daher der Verkehrssicherheit, da gleich zu Beginn der Fahrt alle Scheiben klare Sicht aufweisen und nicht erst im Laufe der Fahrt beschlagfrei werden.

Vorteilhaft ist auch die Handhabung des Gerätes. Ohne Zusatzaggregate ist ein Abtauen und eine Befreiung von einem Belag schnell möglich. Im Handgriff des Gerätes befindet sich ein Sicherheitsschalter. Dieser Sicherheitsschalter gewährleistet, daß das Gerät normalerweise nur betrieben werden kann, wenn es auch am Handgriff gefaßt ist. Hierdurch wird auch sichergestellt, daß das Gerät keinen Brand verursachen kann, wenn es versehentlich auf die Polsterung fallen gelassen wird. Die Stromzuführung ist dann automatisch abgeschaltet.

Durch die Verstellung des Reflektors kann der Strahlkegel verstellt werden. Hierdurch läßt sich eine mehr großflächige oder mehr intensive Bestrahlung erreichen.

Ein weiterer wesentlicher Vorteil ist, daß der Glühkörper der Strahlungsquelle in eine Fassung eingesetzt ist, die sich auch für Glühbirnen eignet. Diese Ausführungsform bietet den Vorteil, daß das Gerät durch Austauschen des Glühkörpers gegen eine Glühbirne in einen Handscheinwerfer verwandelt werden kann.

Als Glühkörper eignen sich insbesondere quarzummantelte Heizwendel, die sich in kurzer Zeit erwärmen und ein gleichmäßiges Infrarotlicht aussenden. Derartige Glühkörper sind gleichweise aus Infrarot-Quarzlampen bekannt.

Zusätzlich wird vorgeschlagen, daß der Reflektor mit einer durchsichtigen Abdeckung versehen ist. Die Abdeckung wird aus hitzebeständigem Glas hergestellt und schützt den Reflektor und den Glühkörper vor äußeren Einflüssen.

Schließlich ist noch vorteilhaft, wenn der Reflektor über einen richtungsverstellbaren Fuß mit dem Gehäuse verbunden ist. Insbesondere bei einer Festeinstellung des Gerätes mit Hilfe der Haftmagneten läßt sich damit der Wärmestrahl auf eine bestimmte Stelle richten.

Schließlich sei noch der Vorteil genannt, daß das Gerät sich auch zum Auftauen von Turschlössern bei Fahrzeugen eignet.

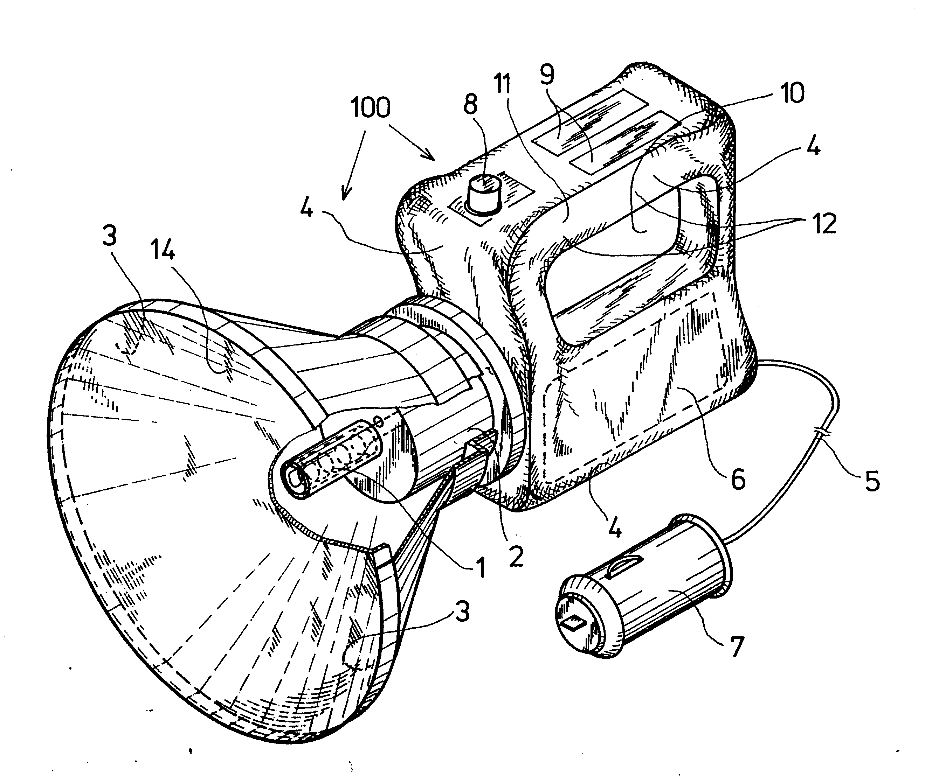

Ein Gerät Neuerung ist in einer Ausführungsform der Zeichnung abgebilde. Es handelt sich um eine perspektivische, teilweise geschnittene Darstellung des Gerätes.

Ein in der Zeichnung abgebildetes tragbares Gerät 100 gemäß Neuerung besteht aus einem Gehäuse 4, mit dem eine Fassung 2 und ein diese umgebender Reflektor 3 verbunden sind. In die Fassung 2 läßt sich ein mit einem Gewindefuß versehener Glühkörper 1 eindrehen. Der Glühkörper 1 besteht beispielsweise aus einem Aluminiumoxid- oder Quarz-Teil, das mit Nuten versehen ist, in die eine Glühspirale eingelegt ist. Der Glühkörper kann auch mit einer Quarzkuppel überfangen sein. Derartige Glühkörper sind an sich bekannt und können verschieden ausgeführt sein. Der Glühkörper 1 kann demnach nach Herausdrehen aus der Fassung 2 gegen eine normale Glühbirne ausgetauscht werden. Der Reflektor 3, der mit der Fassung 2 und dem Gehäuse 4 direkt verbunden ist, focussiert die Wärme- oder Lichtstrahlen in bekannter Weise.

Die Fassung 2 ist derart mit dem Gehäuse 4 verbunden, daß eine Richtungsveränderung möglich ist. Hierzu ist beispielsweise ein Kugelgelenk (nicht dargestellt) geeignet. Auch ist möglich, den Reflektor 3 in einen ihn umgebenden Gehäuseteil einzulassen und ihn richtungsverstellbar über ein Kugelgelenk zu machen.

Am Gehäuse 4 des Gerätes 100 ist ein Stromanschlußkabel 5 angeschlossen, an dessen Ende sich ein Niedervolt-Stecker 7 befindet. Dieser Niedervolt-Stecker 7 kann in die Niedervolt-Steckdose (Zigarettenanzünder eines Personenkraftwagens) eingesteckt werden. Sowohl das Stromanschlußkabel 5 als auch der Niedervolt-Stecker 7 können nach dem Gebrauch in einem Kabelaufnahmeraum 6 deponiert werden, so daß das Stromanschlußkabel 5 samt Niedervolt-Stecker 7 nach Gebrauch nicht lose am Gerät hängt.

Das Gehäuse 4 weist ferner zwei Dauerhaft-Magnete 9 auf, so daß es außen an einer Metallfläche, z. B. einer Kfz-Karosserie, festgelegt werden kann. Die beiden Dauerhaft-Magnete 9, die sich ebenfalls im Handgriff 11 befinden, sind darin versenkt und bilden mit dem Handgriff 11 eine fluchtende Oberfläche.

Damit das Gehäuse 4 des Gerätes 100 leicht zu handhaben ist, weist es einen Handgriff 11 und eine Handgriffsöffnung 10 auf. Innerhalb des Handgriffes 11 befindet sich der Griffbereich 12. Ein Sicherheitsschalter 8 liegt im Bereich des Handgriffes 11, d. h. im Griffbereich 12. Der Sicherheitsschalter 8 ist derart placiert, daß er gunstig mit dem Daumen bedient werden kann. Er ragt weiterhin über die Begrenzungsebene des Handgriffes 11 hinaus.

Weiterhin ist auf den Reflektor eine durchsächtäge, glasklare Abdeckung 14 aufgesetzt, die innerhalb des Randes gehalten ist. Die Abdeckung schützt damit den Reflektorbereich vor äußeren Einflüssen und Berührung.

Hingewiesen werden soll auch auf die Möglichkeit, in das Gehäuse 4 einen Accu oder eine aufladbare Batterie unterzubringen. Anstelle des Niedervoltsteckers kann auch eine Adapter-Steckvorrichtung vorgesehen sein, die es erlaubt, das Gerät über das 220-Volt-Netz zu betreiben.

Die Bedienung des Gerätes ist einfach und schnell. Zunächst wird aus dem Kabelaufnahmeraum 6 der NiedervoltStecker 7 samt Stromanschlußkabel 5 herausgeholt. Der Stecker wird in die Steckdose des Zigarettenanzünders eingeführt. Bei Herabdrücken des Sicherheitsschalters schließt sich der Stromkreis. Mit dem Gerät lassen sich nun die beschlagenen und vereisten Flächen "ableuchten". Dabei ist wahlweise ein weitgefächerter oder zentrierter Strahlkegel zu wählen. Diese Veränderung kann durch ver änderte Focussierung des Reflektors eingestellt werden Es ist auch möglich, mit Hilfe des Gelenkes zwischen Fassung 2 und Gehäuse 4 die Strahlrichtung zu ändern, insbesondere dann, wenn das Gerät auf eine Fläche mit Hilfe der Dauer-Magnete 9 aufgesetzt wird. In diesem Falle wird gleichzeitig der Sicherheitsschalter 8 heruntergedrückt, so daß auch in diesem Zustand das Gerät eingeschaltet ist.

Wird die Wärmequelle nicht benötigt, so kann der Glühkörper 1 herausgeschraubt und gegen eine Glühbirne ausgetauscht werden.

Insgesamt ist damit das Gerät vielseitig verwendbar und wird sich für den Besitzer bald als unentbehrlich erweisen.

## Patentansprüche

1. Tragbares Gerät zur Erzeugung von Wärmestrahlen, mit einer Strahlungsquelle, einem Reflektor, einem Gehäuse und einem Stromkabel, dadurch gekennzeichnet, daß das Stromkabel (5) in einem Niedervolt-Stecker (7) für Auto-Innenraumstecker (Zigarettenanzünder) endet, das Gerät einen Handgriff (11) besitzt, und daß die Strahlungsquelle ein Glühkörper (1) ist, der in eine auch für Glühbirnen geeignete Fassung (2) eingesetzt ist.

2. Gerät nach Anspruch 1, dadurch gekennzeichnet, daß im Griffbereich (12) des Handgriffes (11) ein Sicherheitsschalter (8) angeordnet ist.

3. Gerät nach Anspruch 1, dadurch gekennzeichnet, daß das Gehäuse mit einem Dauer-Haftmagneten (9) versehen ist.

4. Gerät nach Anspruch 1, dadurch gekennzeichnet, daß die Fassung (2) für die Strahlungsquelle (1) in der Achse des Reflektors (3) verschiebbar ist.

5. Gerät nach Anspruch 1, dadurch gekennzeichnet, daß der Reflektor (3) mit einer durchsichtigen Abdeckung (14) versehen ist.

6. Gerät nach Anspruch 1, dadurch gekennzeichnet, daß der Reflektor (3) mit der Fassung (2) über einen richtungsverstellbaren Fuß mit dem Gehäuse (4) verbunden ist.

7. Gerät nach Anspruch 1 oder 6, dadurch gekennzeichnet, daß der Reflektor (3) in einen ihn umgebenden Gehäuseteil richtungsverstellbar eingelassen ist.